# EUROPEAN PATENT SPECIFICATION

(11) **EP 3 751 982 B1**
(45) Date of publication and mention of the grant of the patent: **21.06.2023**
(21) Application number: 18829276.7
(22) Date of filing: 14.12.2018
(51) Int. Cl.: A01G 3/025, B25G 1/04

(54) **EXTENDABLE TOOL**
AUSZIEHBARES WERKZEUG
OUTIL EXTENSIBLE

(30) Priority: 14.02.2018 DE 102018001165
(43) Date of publication of application: 23.12.2020
(73) Proprietor: HUSQVARNA AB, 561 82 Huskvarna (SE)
(72) Inventor: KISTLER, Michael, 89185 Hüttisheim (DE)
(74) Representative: Finkele, Rolf
(86) International application number: PCT/EP2018/084943
(87) International publication number: WO 2019/158255

(56) References cited:
- TW-A- 201 350 291
- US-A1- 2009 090 224

## Description

### TECHNICAL FIELD

The present disclosure relates to an extendable tool, and more particularly to an operational aspect of the extendable tool.

### BACKGROUND

Generally, handheld machine tools, such as a pruning tool, may include a pruning head coupled to a handle. The handle may be used to hold the pruning tool during a pruning operation. In many situations, the pruning tool may be used in difficult to access or hard to reach locations, such as deep within bushes, raised locations above ground, and the like. In such a situation, it may be difficult to complete the pruning operation with required precision and quality.

Therefore, in some applications, the handle of the pruning tool may have an extension feature, such as a telescopic extension. The handle may include interconnecting telescopic tubes which may be extended or retracted, as the case may be, in order to increase or reduce an overall length of the handle of the pruning tool respectively. The telescopic extension of the handle may be provided by a locking mechanism. The locking mechanism may include a button and a locking bolt. For extending or retracting the handle, a user may operate the button which may release the locking bolt. An example of a telescoping tool is known from TW 201 350 291 A. It discloses a locking mechanism for a telescopic tube arrangement. When a push button is pressed, positioning spring actuates a locking element in a direction orthogonal to movement of the push button. The locking element expands and contracts accordingly to fit in one of the plurality of slots to change relative position of two tubes telescopically. The locking element moves orthogonally to the actuating component i.e. the push button. Also, the locking element moves along the pole.

This, in turn, may unlock the telescopic tubes and the user may have to manually extend or retract the telescopic tube to achieve the desired length of the handle. Further, the user may have to again operate the button to lock the locking bolt in order to secure the telescopic tubes with respect to one another. This may result in an inefficient and uncomfortable manner of altering the length of the handle. Further, the button may be located at a distant location on the handle which may make operation of the button difficult and inconvenient. Hence, there is a need for an improved extendable tool or handle for such applications.

### SUMMARY

In view of the above, it is an objective of the present invention to solve or at least reduce the drawbacks discussed above. The objective is achieved by an extendable tool, according to claim 1. The extendable tool includes an outer tube and an inner tube disposed movably within the outer tube. The inner tube includes at least one receiving portion provided therein. The extendable tool includes a handle portion coupled with the outer tube. The handle portion includes a slot provided therein. The extendable tool includes a slider member provided within the slot. The slider member is adapted to slide within the slot between a first position and a second position. The extendable tool also includes a locking element provided in association with each of the outer tube and the inner tube. The locking element is adapted to be selectively engaged with the at least one receiving portion such that the locking element limits movement of the inner tube with respect to the outer tube. The extendable tool further includes an engagement member coupled with the slider member. The engagement member is adapted to slide within the outer tube. The engagement member includes an inclined surface. In the first position of the slider member, the slider member actuates the engagement member such that the inclined surface of the engagement member engages the locking element with respect to the at least one receiving portion. The slider member in association with the engagement member and the locking element provides a simple and ergonomic mechanism to selectively lock the extendable tool at a required length, based on operational requirements. The mechanism includes limited moving components, in turn, providing a simple design to the mechanism which is easy to manufacture with limited cost.

In the second position of the slider member, the slider member may actuate the engagement member such that the inclined surface of the engagement member disengages the locking element with respect to the at least one receiving portion to allow movement between the outer tube and the inner tube. As such, the slider member in association with the engagement member and the locking element provides the simple and ergonomic mechanism to selectively extend or retract the extendable tool at the required length, based on operational requirements.

According to the present invention, the locking element is a roller ball. As such, the roller ball provides a simple design of the locking element which is readily available and easy to manufacture, in turn, limiting component and mechanism cost.

The slider member is a spring biased type slider member. As such, the spring biased type slider member provides a simple and ergonomic slider member which is aesthetic and easy to operate.

The extendable tool may include an outer cap disposed on the outer tube. The outer cap includes a retention portion provided in association with the locking element. The retention portion is adapted to limit slipping of the locking element outside the outer tube. As such, the retention device provides a stop for limiting falling of the locking element from a space between the outer tube and the inner tube.

The retention portion may be adapted to contact the inclined surface of the engagement member in the first position of the slider member. As such, the contact between the retention portion and the engagement member limits falling of the locking element from the space between the outer tube and the inner tube.

The extendable tool may include an inner stop disposed within the outer tube. The inner stop is adapted to engage with the inner tube to limit movement of the inner tube within the outer tube. As such, the inner stop provides to limit maximum movement of the inner tube within the outer tube during retraction of the extendable tool.

Other features and aspects of this disclosure will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of an extendable tool;
**FIG. 2** shows a partial cross-sectional view of the extendable tool;
**FIG. 3** shows another partial cross-sectional view of the extendable tool.

### DESCRIPTION OF EMBODIMENTS

The present invention will be described more fully hereinafter with reference to the accompanying drawings, in which example embodiments are shown. These embodiments are provided so that this disclosure will be thorough and complete, and will fully convey the scope of the invention to those skilled in the art. In the drawings, like numbers refer to like elements. The scope of the invention is defined by the appended claims.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "parallel", "inclined", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

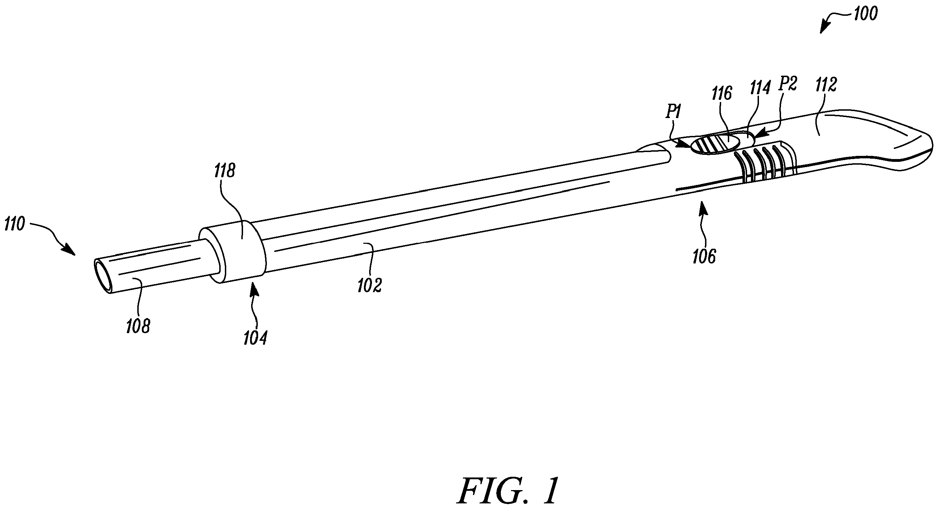

Referring to **FIG. 1****,** a perspective view of an extendable tool **100** is illustrated. The extendable tool **100** may be used in conjunction with any other work tool (not shown), such as a garden equipment, a forestry equipment, a construction equipment, a kitchen equipment, a cleaning equipment, an indoor equipment, and the like. The extendable tool **100** is adapted to provide a varied length to the work tool for reach and/or accessibility, based on operational requirements.

The extendable tool **100** includes an outer tube **102.** In the illustrated embodiment, the outer tube **102** includes a substantially hollow and cylindrical configuration. In other embodiments, the outer tube **102** may include any other configuration, such as rectangular, elliptical, and the like, based on application requirements. The outer tube **102** includes a first end **104** and a second end **106.** The second end **106** is disposed opposite the first end **104.**

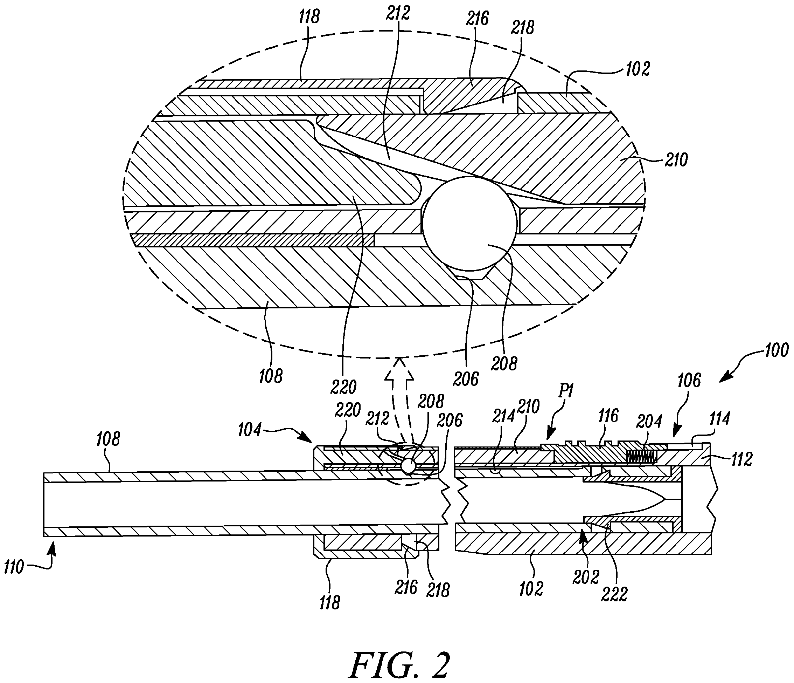

The extendable tool **100** includes an inner tube **108.** In the illustrated embodiment, the inner tube **108** includes a substantially hollow and cylindrical configuration. In other embodiments, the inner tube **108** may include any other configuration, such as rectangular, elliptical, and the like, based on application requirements. The inner tube **108** includes a third end **110** and a fourth end **202** (shown in **FIG. 2**). The fourth end **202** is disposed opposite the third end **110.** The third end **110** is adapted to be coupled to the work tool (not shown). The inner tube **108** is adapted to be movably disposed within the outer tube **102.** Accordingly, the fourth end **202** is adapted to be disposed within the outer tube **102** through the first end **104.**

The extendable tool **100** includes a handle portion **112** coupled with the outer tube **102.** More specifically, the handle portion **112** is provided on the second end **106** of the outer tube **102.** The handle portion **112** is adapted to hold the extendable tool **100** during a work operation. The handle portion **112** includes a slot **114** provided therein. The slot **114** is adapted to receive a slider member **116** therein. The slider member **116** is adapted to slide within the slot **114** between a first position **"P1"** and a second position **"P2".**

In the illustrated embodiment, the slider member **116** is a spring **204** biased type slider member. Accordingly, the slider member **116** is biased in the first position **"P1"** using a spring **204** (shown in **FIG. 2**). In the first position "**P1**" of the slider member **116,** movement of the inner tube **108** with respect to the outer tube **102** is limited in order to maintain a desired length of the extendable tool **100.** In the second position **"P2"** of the slider member **116,** the inner tube **108** is movable with respect to the outer tube **102** in order to increase or reduce the desired length of the extendable tool **100** and will be explained in more detail later.

Referring to **FIG. 2****,** a cross-sectional view of the extendable tool **100** is illustrated. The inner tube **108** includes a receiving portion **206** provided therein. The receiving portion **206** includes a substantially angled and recessed configuration. The receiving portion **206** will be explained in more detail later. The extendable tool **100** also includes a locking element **208** provided in association with each of the outer tube **102** and the inner tube **108.** In the illustrated embodiment, the locking element **208** is a roller ball.

Shape of the receiving portion 206 may depend upon shape of the locking element 208. The receiving portion 208 may be an indent, a hole, a groove, a depression, or any other such shape which may appropriately receive the locking element 208. Shape of the receiving portion 206 may be complementary to shape of the locking element 208. Further, as the receiving portion 206 forms a part of the inner tube 108, shape of the receiving portion 208 may also depend on shape and cross-sectional structure of the inner tube 108.

The locking element **208** is adapted to be selectively engaged with the receiving portion **206.** Accordingly, in such a situation, the locking element **208** is disposed, at least partially, between the inner tube **108** and the outer tube **102.** As such, the locking element **208** provides a restriction between the inner tube **108** and the outer tube **102** in order to limit movement of the inner tube **108** with respect to the outer tube **102.** Accordingly, the desired length of the extendable tool **100** is maintained when the locking element **208** is received within the receiving portion **206.**

The extendable tool **100** further includes an engagement member **210** disposed within the outer tube **102.** The engagement member **210** is coupled with the slider member **116.** Accordingly, the engagement member **210** is adapted to slide within the outer tube **102** based on movement of the slider element between the first position "**P1**" and the second position **"P2".** The engagement member **210** also includes an inclined surface **212** provided on one end thereof. The inclined surface **212** is adapted to selectively contact the locking element **208**.

More specifically, in the illustrated figure, the slider member **116** is shown in the first position "**P1**". Accordingly, the slider member **116** actuates the engagement member **210** such that the inclined surface **212** of the engagement member **210** contacts the locking element **208** and engages the locking element **208** with respect to the receiving portion **206.** As such, in the first position "**P1**" of the slider member **116,** the engagement member **210** maintains the locking element **208** within the receiving portion **206.** The locking element **208,** thus, limits any movement between the outer tube **102** and the inner tube **108,** in turn, maintaining the desired length of the extendable tool **100.**

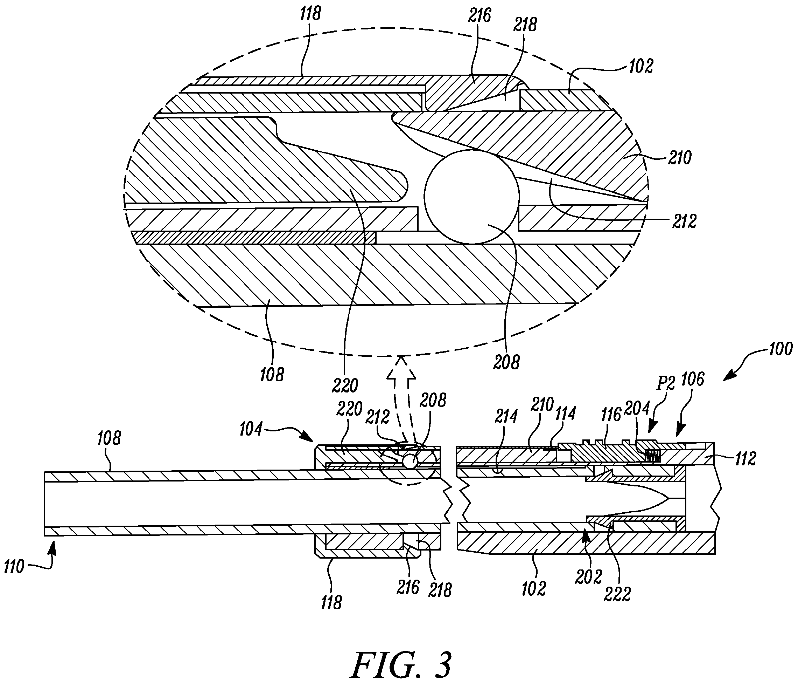

Referring to **FIG. 3****,** another partial cross-sectional view of the extendable tool **100** is illustrated. More specifically, in the illustrated figure, the slider member **116** is shown slid in the second position **"P2".** Accordingly, the slider member **116** actuates the engagement member **210** away from the locking element **208.** As such, that the inclined surface **212** of the engagement member **210** may break contact with the locking element **208** and disengage the locking element **208** with respect to the receiving portion **206.**

Further, as the outer tube **102** and the inner tube **108** may be moved with respect to one another, the angled configuration of the receiving portion **206** may direct the locking element **208** away from the receiving portion **206** and away from between the outer tube **102** and the inner tube **108.** This may remove any restriction provided by the locking element **208** and may allow movement between the outer tube **102** and the inner tube **108** in order to vary the desired length of the extendable tool **100.**

Further, as the outer tube **102** and the inner tube **108** may be moved with respect to one another, the extendable tool **100** may be extended or retracted to a new desired length. The locking element **208** may then be received in another receiving portion **214** at the new desired length. It should be noted that the another receiving portion **214** may be similar to the receiving portion **206** and may be provided in the inner tube **108** spaced apart with respect to the receiving portion **206.** Also, it should be noted that the inner tube **108** may include multiple receiving portions based on number of varied incremental lengths of the extendable tool **100.** As the locking element **208** may be received in the another receiving portion **214,** the slider member **116** may be biased due to the spring **204** in the first position "**P1**".

As a result, the engagement member **210** may be actuated such that the inclined surface **212** may contact the locking element **208** and retain the locking element **208** in the another receiving portion **214.** Accordingly, the locking element **208** may again provide the restriction between the outer tube **102** and the inner tube **108** in order to limit any movement between the inner tube **108** and the outer tube **102.** This may maintain the new desired length of the extendable tool **100.**

Referring back to **FIG. 1****,** the extendable tool **100** also includes an outer cap **118** disposed on the outer tube **102.** More specifically, the outer cap **118** is disposed on the first end **104** of the outer tube **102.** Also, the outer cap **118** is disposed on the outer tube **102** such that the inner tube **108** is movably disposed through the outer cap **118.** Referring to **FIG. 2****,** the outer cap **118** is removably affixed on the outer tube **102** via engagement of one or more tabs **216** with respective tab receivers **218** provided on the outer tube **102.**

The outer cap **118** includes a retention portion **220** disposed within the outer tube **102.** More specifically, the retention portion **220** is provided in association with the locking element **208.** In the first position "**P1**" of the slider member **116,** the retention portion **220** is adapted to contact the inclined surface **212** of the engagement member **210.** Accordingly, in the first position "**P1**" of the slider member **116,** the retention portion **220** in association with the engagement member **210** limits slipping of the locking element **208** outside the outer tube **102.** Referring to **FIG. 3****,** in the second position **"P2"** of the slider member **116,** the retention portion **220** is adapted to individually limit slipping of the locking element **208** outside the outer tube **102.**

Additionally, referring to **FIGS. 2** and 3, the extendable tool **100** includes an inner stop **222** disposed within the outer tube **102.** More specifically, the inner stop **222** is disposed at the second end **106** of the outer tube **102.** Also, the inner stop **222** is disposed in association with the fourth end **202** of the inner tube **108.** The inner stop **222** is adapted to engage with the fourth end **202** of the inner tube **108** in order to limit movement of the inner tube **108** within the outer tube **102.** As such, the inner stop **222** provides to limit maximum retraction of the inner tube **108** within the outer tube **102.**

In the drawings and specification, there have been disclosed preferred embodiments and examples. The scope of the invention is defined by the appended claims.

### LIST OF ELEMENTS

- **100**: Extendable Tool
- **102**: Outer Tube
- **104**: First End
- **106**: Second End
- **108**: Inner Tube
- **110**: Third End
- **112**: Handle Portion
- **114**: Slot
- **116**: Slider Member
- **118**: Outer Cap
- **202**: Fourth End
- **204**: Spring
- **206**: Receiving Portion
- **208**: Locking Element
- **210**: Engagement Member
- **212**: Inclined Surface
- **214**: Another Receiving Portion
- **216**: Tab
- **218**: Tab Receiver
- **220**: Retention Portion
- **222**: Inner Stop
- **P1**: First Position
- **P2**: Second Position

## Claims

1. An extendable tool (**100**) comprising:
an outer tube (**102**);
an inner tube (**108**) disposed movably within the outer tube (**102**), the inner tube (**108**) including at least one receiving portion (**206**, **214**) provided therein;
a handle portion (**112**) coupled with the outer tube (**102**), the handle portion (**112**) including a slot (**114**) provided therein;
a slider member (**116**) provided within the slot (**114**), the slider member (**116**) adapted to slide within the slot (**114**) between a first position (**P1**) and a second position (**P2**), with the slider member (**116**) being of the spring biased type, wherein a spring (**204**) generating this biasing force directly butts against the handle portion (**112**); and
a locking element (**208**) provided in association with each of the outer tube (**102**) and the inner tube (**108**), the locking element (**208**) adapted to be selectively engaged with the at least one receiving portion (**206**, **214**) such that the locking element (**208**) limits movement of the inner tube (**108**) with respect to the outer tube (**102**);
the extendable tool (**100**) further includes:
an engagement member (**210**) coupled with the slider member (**116**), the engagement member (**210**) adapted to slide within the outer tube (**102**), the engagement member (**210**) including an inclined surface (**212**),
wherein, in the first position (**P1**) of the slider member (**116**), the slider member (**116**) actuates the engagement member (**210**) such that the inclined surface (**212**) of the engagement member (**210**) engages the locking element (**208**) with respect to the at least one receiving portion (**206**, **214**);
**characterized in that:**
the locking element (**208**) is a roller ball; and
the spring (**204**) directly butts against the slider member (**116**).

2. The extendable tool (**100**) of claim 1, wherein, in the second position (**P2**) of the slider member (**116**), the slider member (**116**) actuates the engagement member (**210**) such that the inclined surface (**212**) of the engagement member (**210**) disengages the locking element (**208**) with respect to the at least one receiving portion (**206**, **214**) to allow movement between the outer tube (**102**) and the inner tube (**108**).

3. The extendable tool (**100**) of claim 1, wherein the slider member (**116**) is a spring biased type slider member (**116**).

4. The extendable tool (**100**) of claim 1 further includes an outer cap (**118**) disposed on the outer tube (**102**), the outer cap (**118**) including a retention portion (**220**) provided in association with the locking element (**208**), the retention portion (**220**) adapted to limit slipping of the locking element (**208**) outside the outer tube (**102**).

5. The extendable tool (**100**) of claim 4, wherein the retention portion (220) is adapted to contact the inclined surface (**212**) of the engagement member (**210**) in the first position (**P1**) of the slider member (**116**).

6. The extendable tool (**100**) of claim 1 further includes an inner stop (**222**) disposed within the outer tube (**102**), the inner stop (**222**) adapted to engage with the inner tube (**108**) to limit movement of the inner tube (**108**) within the outer tube (**102**).

## Patentansprüche

1. Ein ausziehbares Werkzeug (100), das Folgendes umfasst:
ein äußeres Rohr (102);
ein inneres Rohr (108), das beweglich innerhalb des äußeren Rohrs (102) angeordnet ist, wobei das innere Rohr (108) mindestens einen darin vorgesehenen Aufnahmeabschnitt (206, 214) aufweist;
einen Griffteil (112), der mit dem äußeren Rohr (102) verbunden ist, wobei der Griffteil (112) einen darin vorgesehenen Schlitz (114) aufweist;
ein Schieberelement (116), das in dem Schlitz (114) vorgesehen ist, wobei das Schieberelement (116) so ausgelegt ist, dass es in dem Schlitz (114) zwischen einer ersten Position (P1) und einer zweiten Position (P2) gleitet, wobei das Schieberelement (116) von einer federvorgespannten Art ist, wobei eine Feder (204), die diese Vorspannkraft erzeugt, direkt an der Griffposition (112) anliegt; und
ein Verriegelungselement (208), das in Verbindung mit sowohl dem äußeren Rohr (102) als auch dem inneren Rohr (108) vorgesehen ist, wobei das Verriegelungselement (208) geeignet ist, selektiv mit dem mindestens einen Aufnahmeabschnitt (206, 214) in Eingriff gebracht zu werden, so dass das Verriegelungselement (208) die Bewegung des inneren Rohrs (108) in Bezug auf das äußere Rohr (102) begrenzt;
das ausziehbare Werkzeug (100) umfasst ferner:
ein Eingriffselement (210), das mit dem Schieberelement (116) gekoppelt ist, wobei das Eingriffselement (210) so eingerichtet ist, dass es innerhalb des äußeren Rohrs (102) gleitet, wobei das Eingriffselement (210) eine geneigte Fläche (212) aufweist,
wobei in der ersten Position (P1) des Schieberelements (116) das Schieberelement (116) das Eingriffselement (210) so betätigt, dass die geneigte Oberfläche (212) des Eingriffselements (210) mit dem Verriegelungselement (208) in Bezug auf den mindestens einen Aufnahmeabschnitt (206, 214) in Eingriff kommt;
**dadurch gekennzeichnet, dass**:
das Verriegelungselement (208) eine Rollenkugel ist; und
die Feder (204) direkt an das Schieberelement (116) anstößt.

2. Das ausziehbare Werkzeug (100) nach Anspruch 1, wobei in der zweiten Position (P2) des Schieberelements (116) das Schieberelement (116) das Eingriffselement (210) so betätigt, dass die geneigte Fläche (212) des Eingriffselements (210) das Verriegelungselement (208) in Bezug auf den mindestens einen Aufnahmeabschnitt (206, 214) außer Eingriff bringt, um eine Bewegung zwischen dem äußeren Rohr (102) und dem inneren Rohr (108) zu ermöglichen.

3. Das ausziehbare Werkzeug (100) nach Anspruch 1, wobei das Schieberelement (116) ein federbelastetes Schieberelement (116) ist.

4. Das ausziehbare Werkzeug (100) nach Anspruch 1 umfasst ferner eine äußere Kappe (118), die auf dem äußeren Rohr (102) angeordnet ist, wobei die äußere Kappe (118) einen Rückhalteabschnitt (220) umfasst, der in Verbindung mit dem Verriegelungselement (208) vorgesehen ist, wobei der Rückhalteabschnitt (220) so eingerichtet ist, dass er ein Rutschen des Verriegelungselements (208) außerhalb des äußeren Rohrs (102) begrenzt.

5. Das ausziehbare Werkzeug (100) nach Anspruch 4, wobei der Rückhalteabschnitt (220) so beschaffen ist, dass er in der ersten Position (P1) des Schieberelements (116) die geneigte Fläche (212) des Eingriffselements (210) berührt.

6. Das ausziehbare Werkzeug (100) nach Anspruch 1 umfasst ferner einen inneren Anschlag (222), der innerhalb des äußeren Rohrs (102) angeordnet ist, wobei der innere Anschlag (222) dazu geeignet ist, mit dem inneren Rohr (108) in Eingriff zu kommen, um die Bewegung des inneren Rohrs (108) innerhalb des äußeren Rohrs (102) zu begrenzen.

## Revendications

1. Outil extensible (**100**) comprenant :
un tube extérieur (**102**) ;
un tube intérieur (**108**) disposé de manière mobile à l'intérieur du tube extérieur (**102**), le tube intérieur **(108)** comprenant au moins une partie de réception (**206, 214**) **;**
une partie poignée (**112**) couplée au tube extérieur (**102**), la partie poignée (**112**) comprenant une fente (**114**) ;
un élément coulissant (**116**) prévu dans la fente (**114**), l'élément coulissant (**116**) étant adapté pour glisser dans la fente (**114**) entre une première position (**P1**) et une seconde position (**P2**), l'élément coulissant (**116**) étant du type sollicité par ressort, dans lequel un ressort (**204**) générant cette force de sollicitation vient directement en butée contre la partie poignée (**112**) ; et
un élément de verrouillage (**208**) associé au tube extérieur (**102**) et au tube intérieur (**108**), l'élément de verrouillage (**208**) étant adapté pour être sélectivement engagé avec au moins une partie de réception (**206**, **214**) de sorte que l'élément de verrouillage (**208**) limite le mouvement du tube intérieur (**108**) par rapport au tube extérieur (**102**) ;
l'outil extensible (**100**) comprend en outre :
un élément d'engagement (**210**) couplé à l'élément coulissant (**116**), l'élément d'engagement (**210**) étant adapté pour glisser à l'intérieur du tube extérieur (**102**), l'élément d'engagement (**210**) comprenant une surface inclinée (**212**),
dans lequel, dans la première position (**P1**) de l'élément coulissant (**116**), l'élément coulissant (**116**) actionne l'élément d'engagement (**210**) de sorte que la surface inclinée (**212**) de l'élément d'engagement (**210**) engage l'élément de verrouillage (**208**) par rapport à l'au moins une partie de réception (**206**, **214**) ;
**caractérisé en ce que** :
l'élément de verrouillage (**208**) est une bille roulante ; et
le ressort (**204**) vient directement en butée contre l'élément coulissant (**116**).

2. Outil extensible (**100**) selon la revendication 1, dans lequel, dans la seconde position (**P2**) de l'élément coulissant (**116**), l'élément coulissant (**116**) actionne l'élément d'engagement (**210**) de sorte que la surface inclinée (**212**) de l'élément d'engagement (**210**) désengage l'élément de verrouillage (**208**) par rapport à l'au moins une partie de réception (**206**, **214**) pour permettre le mouvement entre le tube extérieur (**102**) et le tube intérieur (**108**).

3. Outil extensible (**100**) selon la revendication 1, dans lequel l'élément coulissant (**116**) est un élément coulissant du type sollicité par ressort (**116**).

4. Outil extensible (**100**) selon la revendication 1 comprend en outre un capuchon extérieur (**118**) disposé sur le tube extérieur (**102**), le capuchon extérieur (**118**) comprenant une partie de rétention (**220**) associée à l'élément de verrouillage (**208**), la partie de rétention (**220**) étant adaptée pour limiter le glissement de l'élément de verrouillage (**208**) à l'extérieur du tube extérieur (**102**).

5. Outil extensible (**100**) selon la revendication 4, dans lequel la partie de rétention (**220**) est adaptée pour entrer en contact avec la surface inclinée (**212**) de l'élément d'engagement (**210**) dans la première position (**P1**) de l'élément coulissant (**116**).

6. Outil extensible (**100**) selon la revendication 1 comprend en outre une butée intérieure (**222**) disposée à l'intérieur du tube extérieur (**102**), la butée intérieure (**222**) étant adaptée pour s'engager dans le tube intérieur (**108**) afin de limiter le mouvement du tube intérieur (**108**) à l'intérieur du tube extérieur (**102**).
